# EUROPEAN PATENT APPLICATION

(11) **EP 4 524 791 A1**
(43) Date of publication of application: **19.03.2025**
(21) Application number: 23902308.8
(22) Date of filing: 27.10.2023
(51) Int. Cl.: G06F 21/56, G06F 21/55

(54) **ON-DEMAND ENABLING METHOD AND APPARATUS FOR SECURITY ASPECT OF MOBILE TERMINAL**

(30) Priority: 14.12.2022 CN 202211610834
(71) Applicant: Alipay (Hangzhou) Information Technology Co., Ltd., Hangzhou, Zhejiang 310000 (CN)
(72) Inventor: ZHENG, Min, Hangzhou, Zhejiang 310000 (CN)
(74) Representative: Fish & Richardson P.C.
(86) International application number: PCT/CN2023/127177
(87) International publication number: WO 2024/125108

(57) **Abstract**

This application relates to on-demand starting methods and apparatuses for mobile-terminal aspect-oriented security. The method includes: after aspect-oriented security on a mobile terminal is started with a service application program on the mobile terminal, determining whether the mobile terminal is at risk of being attacked; and if yes, acquiring, based on a manner in which the mobile terminal is attacked, an attacked function in the service application program as an injection point, and injecting an aspect program from the injection point by using an aspect base of the aspect-oriented security on the mobile terminal, to execute an aspect-oriented security service by using the injected aspect program; or otherwise, exiting the aspect-oriented security on the mobile terminal. According to on-demand starting methods and apparatuses for mobile-terminal aspect-oriented security, after the aspect-oriented security on the mobile terminal is started, it is first determined whether the mobile terminal is at risk of being attacked. After it is determined that the mobile terminal is at risk of being attacked, the aspect-oriented security on the mobile terminal runs, and injection is performed from a related injection point based on an attack manner. Otherwise, the aspect-oriented security on the mobile terminal is exited. As such, the aspect-oriented security on the mobile terminal is started on demand, thereby avoiding unnecessary resource waste.

## Description

### TECHNICAL FIELD

This application relates to the field of aspect-oriented security on a mobile terminal, and more specifically, to on-demand starting methods and apparatuses for mobile-terminal aspect-oriented security, readable storage media, and electronic devices.

### BACKGROUND

Aspect-oriented security (that is, parallel aspect-oriented security) is a method for dynamically modifying or adding an aspect program used for implementing an aspect-oriented security service to running logic of a service application program in an aspect-oriented programming (AOP) manner, without modifying the service application program. As such, when the aspect-oriented security service is implemented, a program for implementing the aspect-oriented security service is decoupled from the service application program, thereby avoiding a development iteration problem caused due to high coupling.

Aspect-oriented security on a mobile terminal is the aspect-oriented security running on the mobile terminal, and needs to perform data communication with an aspect server. In an application scenario of the mobile terminal, a heavy service application program may have millions of client activities. If aspect-oriented security is started on all of these mobile terminals, traffic and storage pressure brought by the aspect server are very large.

Actually, when the service application program runs, many mobile terminals are not at risk of being attacked. If the aspect-oriented security is started on these mobile terminals, burden on the aspect server is increased, causing unnecessary resource waste.

### SUMMARY

A purpose of this application is to provide an on-demand starting method for mobile-terminal aspect-oriented security. After a service application program is started, it is first determined whether a mobile terminal is at risk of being attacked, and it is determined based on a determining result whether to start or exit aspect-oriented security on the mobile terminal. As such, the aspect-oriented security on the mobile terminal is started on demand, thereby avoiding unnecessary resource waste.

For the above-mentioned purpose, this application provides an on-demand starting method for mobile-terminal aspect-oriented security, including the following steps: after aspect-oriented security on a mobile terminal is started with a service application program on the mobile terminal, determining whether the mobile terminal is at risk of being attacked; and if yes, acquiring, based on a manner in which the mobile terminal is attacked, an attacked function in the service application program as an injection point, and injecting an aspect program from the injection point by using an aspect base of the aspect-oriented security on the mobile terminal, to execute an aspect-oriented security service by using the injected aspect program; or otherwise, exiting the aspect-oriented security on the mobile terminal.

Further, in some implementations, the determining whether the current mobile terminal is at risk of being attacked includes: determining whether the mobile terminal encounters jailbreak/ROOT; and/or determining whether injection/HOOK occurs on the service application program; and/or determining whether the service application program is debugged.

Further, in some implementations, the determining whether the mobile terminal encounters jailbreak/ROOT specifically includes: detecting whether a high-risk file used for storing configuration information exists in a memory of the mobile terminal, where if yes, the mobile terminal encounters jailbreak/ROOT; or otherwise, the mobile terminal does not encounter jailbreak/ROOT.

Further, in some implementations, the determining whether injection/HOOK occurs on the service application program specifically includes: traversing entry addresses of functions in the service application program, and then detecting whether the entry addresses of the functions and the service application program are in the same memory address space, where if yes, injection/HOOK does not occur on the service application program; or otherwise, injection/HOOK occurs on the service application program.

Further, in some implementations, the determining whether the service application program is debugged specifically includes: reading a value of an object or a file that controls a debugging switch in a memory, where if the value is true or 1, the service application program is debugged; or if the value is false or 0, the service application program is not debugged.

Further, in some implementations, the acquiring, based on a manner in which the mobile terminal is attacked, an attacked function as an injection point specifically includes: acquiring, as the injection point, a function, in the service application program, used to operate a high-risk file left after the mobile terminal encounters j ailbreak/ROOT; and/or acquiring a function with injection/HOOK in the service application program as the injection point; and/or acquiring a debugged function in the service application program as the injection point.

Another purpose of this application is to provide an on-demand starting apparatus for mobile-terminal aspect-oriented security. After a service application program is started, it is first determined whether a mobile terminal is at risk of being attacked, and it is determined based on a determining result whether to start or exit aspect-oriented security on the mobile terminal. As such, the aspect-oriented security on the mobile terminal is started on demand, thereby avoiding unnecessary resource waste.

For the above-mentioned purpose, this application provides an on-demand starting apparatus for mobile-terminal aspect-oriented security, including: a determining module, configured to: after aspect-oriented security on a mobile terminal is started with a service application program on the mobile terminal, determine whether the mobile terminal is at risk of being attacked; an injection module, configured to: when a determining result of the determining module is yes, acquire, based on a manner in which the mobile terminal is attacked, an attacked function as an injection point, and inject an aspect program from the injection point by using an aspect base of the aspect-oriented security on the mobile terminal, to execute an aspect-oriented security service by using the injected aspect program; and an exit module, configured to: when a determining result of the determining module is no, exit the aspect-oriented security on the mobile terminal.

Further, in some implementations, the determining whether the current mobile terminal is at risk of being attacked includes: determining whether the mobile terminal encounters jailbreak/ROOT; and/or determining whether injection/HOOK occurs on the service application program; and/or determining whether the service application program is debugged.

Further, in some implementations, the determining whether the mobile terminal encounters jailbreak/ROOT specifically includes: detecting whether a high-risk file used for storing configuration information exists in a memory of the mobile terminal, where if yes, the mobile terminal encounters jailbreak/ROOT; or otherwise, the mobile terminal does not encounter jailbreak/ROOT.

Further, in some implementations, the determining whether injection/HOOK occurs on the service application program specifically includes: traversing entry addresses of functions in the service application program, and then detecting whether the entry addresses of the functions and the service application program are in the same memory address space, where if yes, injection/HOOK does not occur on the service application program; or otherwise, injection/HOOK occurs on the service application program.

Further, in some implementations, the determining whether the service application program is debugged specifically includes: reading a value of an object or a file that controls a debugging switch in a memory, where if the value is true or 1, the service application program is debugged; or if the value is false or 0, the service application program is not debugged.

Further, in some implementations, the acquiring, based on a manner in which the mobile terminal is attacked, an attacked function as an injection point specifically includes: acquiring, as the injection point, a function, in the service application program, used to operate a high-risk file left after the mobile terminal encounters j ailbreak/ROOT; and/or acquiring a function with injection/HOOK in the service application program as the injection point; and/or acquiring a debugged function in the service application program as the injection point.

Still another purpose of this application is to provide a readable storage medium storing a computer program. When the computer program is executed in a computer, the computer performs steps in the above-mentioned on-demand starting method for mobile-terminal aspect-oriented security.

Still another purpose of this application is to provide an electronic device including a memory and a processor. The memory stores executable code. When the processor executes the executable code, the processor performs steps in the above-mentioned on-demand starting method for mobile-terminal aspect-oriented security.

### BRIEF DESCRIPTION OF DRAWINGS

FIG. 1 is a flowchart of an on-demand starting method for mobile-terminal aspect-oriented security according to an embodiment of this application; and
FIG. 2 is a block diagram of a structure of an on-demand starting apparatus for mobile-terminal aspect-oriented security according to another embodiment of this application.

### DESCRIPTION OF EMBODIMENTS

The following provides and describes example embodiments of this application with reference to the accompanying drawings in detail.

Aspect-oriented security is a method for dynamically modifying or adding an aspect program used for implementing an aspect-oriented security service to running logic of a service application program in an aspect-oriented programming (AOP) manner, without modifying the service application program. In this way, when the aspect-oriented security service is implemented, a program for implementing the aspect-oriented security service is decoupled from the service application program, thereby avoiding a development iteration problem caused due to high coupling.

The aspect program herein is an enhanced program for implementing the aspect-oriented security service based on service running logic. The aspect program may be injected into a corresponding injection point of the service application program in the aspect-oriented programming manner. The aspect program is triggered to be executed in a process of executing the service application program, to implement a needed aspect-oriented security service function.

When the service application program executes a service, the service application program usually executes the service through calls between methods. Therefore, any method in the service application program may be used as an injection point of the aspect program, that is, the above-mentioned entry point. The aspect program is injected from a corresponding injection point. When the service application program performs execution to the injection point, that is, calls a method of the service application program corresponding to the injection point, the aspect program injected from the injection point is executed.

Generally, there is high reusability of code responsible for a process of injecting the aspect program from the injection point. Therefore, the program implementing this process is generally abstracted as a service module, that is, an aspect base. The aspect base may acquire, from a server providing the aspect-oriented security service, the aspect program that needs to be deployed, and acquire the injection point at which the aspect program is injected into the service application program. After an application container is started, wakeup is implemented, and the corresponding aspect program is injected from the injection point of the service application program.

The service application program may be a service application program for providing a service in a server of a service platform. The service may be a service provided by the server of the service platform to a user, for example, a query service and a payment service. The service may alternatively be a service provided by the server of the service platform to another server, for example, a settlement service.

Certainly, it can be determined from the above-mentioned descriptions that, to decouple the program of the aspect-oriented security service from the service application program, in this specification, the program of the aspect-oriented security service and the service application program are interleaved in an aspect-oriented programming manner during service execution, and are independently maintained in parallel with each other. Therefore, different from a service provider of a service application program, a third party providing an aspect-oriented security service can manage, by using the server, content related to the aspect-oriented security service, for example, configuration of an aspect-oriented security service management and control policy, version iteration of the aspect program, and deployment rule configuration of the aspect program. Certainly, the third party or the service provider can provide an aspect-oriented security service.

When managing content related to the aspect-oriented security service, the server can record various configuration information such as configuration of various policies and the deployment rule configuration of the aspect program by using a configuration file. The aspect base can deploy the aspect program based on the configuration file, or the server can implement the aspect-oriented security service based on the configuration file.

In actual application, the service provider is generally provided with an equipment room that includes several physical machines or physical servers to provide, by using the physical machines, physical resources needed by the service application program. Certainly, a service application program may not need all physical resources of an entire physical machine. Therefore, generally, a plurality of virtual hosts (virtual hosting) run on one physical machine by using a virtualization technology. Various virtual hosts are independent of each other, and each enjoy some physical resources of the physical machine. Then, an application container can be deployed in the virtual host, and the service application program can run by using the application container. The application container generally includes physical resources allocated to the application container, for example, a CPU and a memory, and a running environment provided to the application container, for example, an operating system (OS) or other running environment data, such as a serial number (SN) of the container, an allocated IP (Influential Property), an application name, a tenant, and an environment variable. The service application program can be deployed in the application container to execute a service.

In a scenario of executing a service based on aspect-oriented security, a service provider or a third-party server providing an aspect-oriented security service can provide a server. Content related to the aspect-oriented security service is managed by using the server. The aspect base is deployed in the application container. The aspect program is injected into the service application program in the service application container by using the aspect base, to provide support for the aspect-oriented security service for the application container of the service provider.

Therefore, the aspect base can be deployed in the application container of the service provider in advance. Generally, when the application container is started, an operating system provided for the application container can be evoked, and the aspect base deployed in advance can run. The injection points of the aspect program and the service application program are obtained from the server by using the aspect base. The aspect program is injected from the injection point of the service application program in the application container. In addition, in a process of executing the service application program, the aspect base can obtain the injection points of the aspect program and the service application program from the server, and inject the aspect program from the injection point of the service application program in the application container.

Certainly, how the aspect base obtains, from the server, information needed for deploying the aspect program can be set as required. For example, needed information can be actively pulled from the server based on the configuration file, or the server can actively deliver needed information received by the aspect base.

After the aspect program is injected from the injection point of the service application program, the service application program can trigger the aspect program in an execution process, to implement a corresponding function of the aspect-oriented security service.

After the service application program is started by the user, the aspect-oriented security on the mobile terminal is started with the service application program. After the aspect-oriented security on the mobile terminal is started, a conventional practice is that the aspect server delivers the default aspect configuration to the aspect base of the aspect-oriented security on the mobile terminal, and then the aspect base completes injection from the injection point based on the default aspect configuration. In other words, the aspect program is injected from the injection point of the service application program. In a running process of the service application program, the corresponding aspect-oriented security service function is implemented by using the aspect program. However, for a service application program on a mobile terminal with a large amount of daily activities, if aspect-oriented security on each mobile terminal keeps running when the service application program runs, traffic and storage pressure brought by the aspect server are very large. Actually, many mobile terminals may be not in a risky state. If the aspect-oriented security on all the mobile terminals run, unnecessary resource waste is caused. Therefore, for some service application programs with a large amount of daily activities, in related technologies, generally, whether aspect-oriented security on a certain mobile terminal still keeps running while the service application program runs is randomly determined by using a blacklist and whitelist mechanism. For example, a mobile terminal in a blacklist is risk-free, and aspect-oriented security on the mobile terminal does not need to run. However, a mobile terminal in a whitelist may be risky, and aspect-oriented security on the mobile terminal needs to keep running. However, the blacklist and the whitelist are static lists pre-determined and stored in the aspect server. Some mobile terminals may not be in a risky state (for example, these mobile terminals does not encounter jailbreak/ROOT) during determining of the blacklist and the whitelist, and therefore are classified into the blacklist. After the blacklist and the whitelist are determined, these mobile terminals encounter jailbreak/ROOT. Therefore, when a service application program runs, aspect-oriented security on the mobile terminal should run. However, because the mobile terminal is in the blacklist, the aspect-oriented security does not run, causing a possible security problem on the mobile terminal. Similarly, when the whitelist is determined, a certain mobile terminal may be in a risky state. However, when a service application program runs, a risk of the mobile terminal is eliminated. In this case, the aspect-oriented security does not need to run, causing resource waste.

Therefore, an embodiment of this application provides an on-demand starting method for mobile-terminal aspect-oriented security. After a service application program is started, risk detection is first performed on a mobile terminal. When the mobile terminal is at risk of being attacked, injection is performed from an injection point based on an attack manner, to monitor actions of an attacker and implement a corresponding aspect-oriented security service function by using aspect-oriented security on the mobile terminal. When the mobile terminal is not at risk of being attacked, the aspect-oriented security on the mobile terminal is exited, thereby reducing pressure on an aspect server and avoiding unnecessary resource waste.

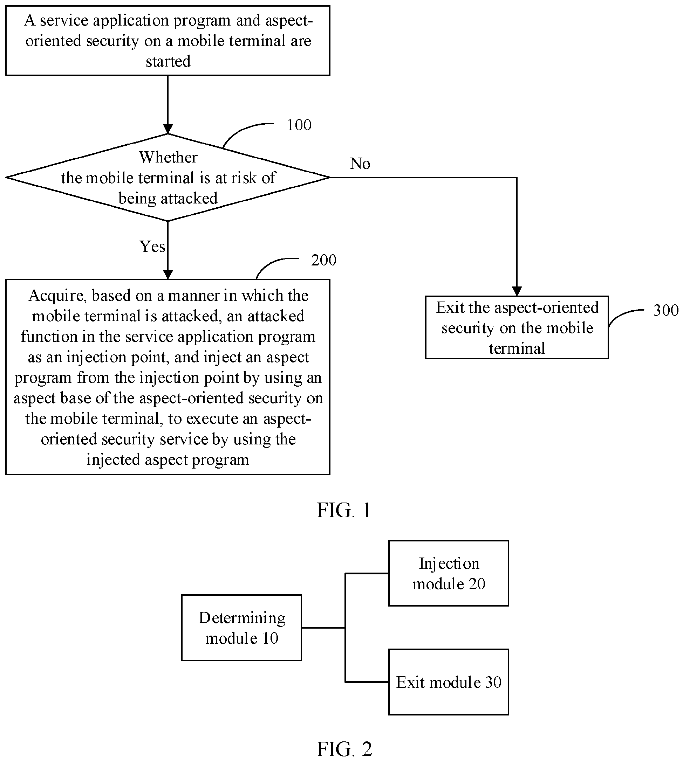

As shown in FIG. 1, the on-demand starting method for mobile-terminal aspect-oriented security in this embodiment of this application includes the following steps 100 to 300.

Step 100: After aspect-oriented security on a mobile terminal is started with a service application program on the mobile terminal, determine whether the mobile terminal is at risk of being attacked; and if yes, perform step 200; or otherwise, perform step 300.

The aspect-oriented security on the mobile terminal is started with the service application program. After the aspect-oriented security on the mobile terminal is started, it is first determined whether the mobile terminal is at risk of being attacked, to determine whether a running environment of the service application program is at risk. In some embodiments, that the mobile terminal is at risk of being attacked includes that the mobile terminal encounters jailbreak/ROOT, and/or injection/HOOK occurs on the service application program, and/or the service application program is debugged. If the mobile terminal encounters jailbreak/ROOT, and/or injection/HOOK occurs on the service application program, and/or the service application program is debugged, it indicates that the mobile terminal is at risk of being attacked. On the contrary, if the mobile terminal encounters jailbreak/ROOT, injection/HOOK occurs on the service application program, and the service application program is debugged, it indicates that the mobile terminal is not at risk of being attacked. Therefore, determining whether the mobile terminal is at risk of being attacked is mainly determining whether the mobile terminal encounters jailbreak/ROOT, and/or injection/HOOK occurs on the service application program, and/or the service application program is debugged.

Jailbreak/ROOT indicates to obtain the highest authority of a system of the mobile terminal. After the mobile terminal encounters jailbreak/ROOT, the attacker can obtain any information of the user or perform any operation on the mobile terminal, resulting in risks such as privacy leakage. After the mobile terminal encounters jailbreak/ROOT, the attacker leaves many high-risk files in a memory of the mobile terminal to store related configuration information. Therefore, whether the mobile terminal encounters jailbreak/ROOT can be determined by detecting whether these high-risk files exist. Specifically, when it is detected that the high-risk files exist in the memory of the mobile terminal, it indicates that the mobile terminal encounters jailbreak/ROOT. Otherwise, it indicates that the mobile terminal does not encounter jailbreak/ROOT.

HOOK is also referred to as a hook, and is a technology that can implement a substitution function to call an entry address. Injection indicates a process in which an attacker injects a third party library implemented by the attacker into the service application program. The attacker usually replaces, by using a combination of injection and HOOK technologies, an entry address of a target function with a function address of the third party library injected by the attacker, to change original functions of a function in the service application program. To detect whether the service application program encounters a risk of injection/HOOK, entry addresses of all functions (or key functions) in the service application program can be traversed. Then, it is detected whether the entry address and the service application program are in the same memory address space. If an entry address of a certain function is not in the same memory address space as the service application program, but is changed to memory address space of the third party library of the attacker, it indicates that the function encounters injection/HOOK, that is, the service application program encounters injection/HOOK. If all the traversed entry addresses of the functions are in the same memory address space as the service application program, it indicates that no function encounters injection/HOOK, that is, the service application program does not encounter injection/HOOK.

In a running process, the service application program may be at risk of being debugged. If the service application program is debugged, the attacker may trace a running target program by using a debugger such as GDB, IDA, and Ptrace; view and modify code and data in the memory, and even analyze and tamper with service logic of a program; and maliciously attack key user data or a server, for example, modify data of a service operation at a user end, such as a transfer account and an amount, resulting in a loss of the user. Therefore, after the service application program is started, whether the service application program is debugged needs to be determined, to determine whether the aspect-oriented security on the mobile terminal keeps running. Specifically, whether the service application program is debugged can be determined by reading a value of an object or a file that controls a debugging switch in the memory in the mobile terminal. If the value of the object or the file that controls the debugging switch is true (or 1), it indicates that the service application program is debugged. If the value of the object or the file that controls the debugging switch is false (or 0), it indicates that the service application program is not debugged.

It may be understood that during running, the service application program may be at another risk of being attacked. The method in this application is not limited to detection of the above-mentioned several risks, and can be extended as required, that is, detection on any other possible risk on the service application program. If the service application program is at risk of being attacked, step 200 is performed; or otherwise, step 300 is performed.

Step 200: Acquire, based on a manner in which the mobile terminal is attacked, an attacked function in the service application program as an injection point, and inject an aspect program from the injection point by using an aspect base of the aspect-oriented security on the mobile terminal, to execute an aspect-oriented security service by using the injected aspect program.

When it is determined that the mobile terminal is at risk of being attacked, it indicates that the service application program is in a risky state, and the aspect-oriented security on the mobile terminal needs to be kept at running to monitor and provide a corresponding aspect-oriented security service function. In some embodiments, after it is determined that the mobile terminal is at risk of being attacked, the mobile terminal can upload the information to the aspect server. After receiving the information, the aspect server can deliver a default aspect configuration file to an aspect base of the aspect-oriented security on the mobile terminal, and then the aspect base injects an aspect program based on the default aspect configuration file, so that an aspect-oriented security service function is implemented by using the aspect program in a running process of the service application program. However, because the aspect configuration file is default, the injection point included in the aspect configuration file may be different from the attacked function of the service application program. For example, in the aspect configuration file, the attacked function is not used as the injection point. Alternatively, in the aspect configuration, the attacked function is used as the injection point, and another unattacked function is used as an injection point. In this way, a quantity of injection points is increased, thereby increasing pressure on the server. Therefore, in some other embodiments, the attacked function in the service application program can be acquired as the injection point based on the manner in which the mobile terminal is attacked, and then the aspect program is injected from these injection points by using the aspect base, to monitor actions of the attacker and provide the corresponding aspect-oriented security service function.

Specifically, if the mobile terminal encounters jailbreak/ROOT, the attacker leaves, in the memory, a high-risk file used for storing configuration information. When the service application program executes these high-risk files in a running process, the service application program is attacked by the attacker. Therefore, a function (for example, a fopen function and a fread function) used to operate these high-risk files in the service application program can be acquired as an injection point, and then the aspect program is injected from these injection points by using the aspect base. For example, these injection points can be uploaded to the aspect server. The aspect server delivers the aspect configuration file to the aspect base based on these injection points, and then the aspect base injects the aspect program from these injection points based on the aspect configuration, to collect and report fine-grained data about an action of the attacker.

If the service application program encounters injection/HOOK, a function with injection/HOOK in the service application program can be acquired as an injection point, and then the aspect program is injected from these injection points by using the aspect base. For example, these injection points can be uploaded to the aspect server. The aspect server delivers the aspect configuration file to the aspect base based on these injection points, and then the aspect base injects the aspect program from these injection points based on the aspect configuration, to collect and report fine-grained data about an action of the attacker.

If the service application program is debugged, a debugged function in the service application program can be acquired as an injection point, and then the aspect program is injected from these injection points by using the aspect base. For example, these injection points can be uploaded to the aspect server. The aspect server delivers the aspect configuration file to the aspect base based on these injection points, and then the aspect base injects the aspect program from these injection points based on the aspect configuration, to collect and report fine-grained data about an action of the attacker.

Step 300: Exit the aspect-oriented security on the mobile terminal.

If it is determined that the mobile terminal is not at risk of being attacked, it indicates that the service application program is not in a risky state. When the service application program runs, the aspect-oriented security on the mobile terminal does not need to be kept at running. Therefore, when the mobile terminal is not at risk of being attacked, the aspect-oriented security on the mobile terminal can be directly exited, to avoid occupation of a resource of the aspect server. For example, when it is determined that the mobile terminal is not at risk of being attacked, the information can be uploaded to the aspect server. When the aspect server receives the information, an empty aspect configuration file is delivered to the aspect base. After the aspect base receives the empty aspect configuration file, the security on the mobile terminal is directly exited. Alternatively, the message may be directly sent to the aspect-oriented security on the mobile terminal. After receiving the message, the aspect-oriented security on the mobile terminal is directly exited.

According to the on-demand starting method for mobile-terminal aspect-oriented security in this embodiment of this application, after the service application program and the aspect-oriented security on the mobile terminal are started, it is first determined whether the mobile terminal is at risk of being attacked. After it is determined that the mobile terminal is at risk of being attacked, the aspect-oriented security on the mobile terminal runs, and injection is performed from a related injection point based on an attack manner. Otherwise, the aspect-oriented security on the mobile terminal is exited. As such, the aspect-oriented security on the mobile terminal is started on demand, thereby avoiding unnecessary resource waste.

As shown in FIG. 2, another embodiment of this application provides an on-demand starting apparatus for mobile-terminal aspect-oriented security including a determining module 10, an injection module 20, and an exit module 30.

The determining module 10 is configured to: after aspect-oriented security on a mobile terminal is started with a service application program on the mobile terminal, determine whether the mobile terminal is at risk of being attacked.

The aspect-oriented security on the mobile terminal is started with the service application program. After the aspect-oriented security on the mobile terminal is started, the determining module 10 can first determine whether the mobile terminal is at risk of being attacked, to determine whether a running environment of the service application program is at risk. In some embodiments, that the mobile terminal is at risk of being attacked includes that the mobile terminal encounters jailbreak/ROOT, and/or injection/HOOK occurs on the service application program, and/or the service application program is debugged. If the mobile terminal encounters jailbreak/ROOT, and/or injection/HOOK occurs on the service application program, and/or the service application program is debugged, it indicates that the mobile terminal is at risk of being attacked. On the contrary, if the mobile terminal encounters jailbreak/ROOT, injection/HOOK occurs on the service application program, and the service application program is debugged, it indicates that the mobile terminal is not at risk of being attacked. Therefore, determining whether the mobile terminal is at risk of being attacked is mainly determining whether the mobile terminal encounters jailbreak/ROOT, and/or injection/HOOK occurs on the service application program, and/or the service application program is debugged.

After the mobile terminal encounters jailbreak/ROOT, the attacker leaves many high-risk files in a memory of the mobile terminal to store related configuration information. Therefore, the determining module 10 can determine, by detecting whether these high-risk files exist, whether the mobile terminal encounters jailbreak/ROOT. Specifically, when it is detected that the high-risk files exist in the memory of the mobile terminal, it indicates that the mobile terminal encounters jailbreak/ROOT. Otherwise, it indicates that the mobile terminal does not encounter jailbreak/ROOT.

To detect whether the service application program encounters a risk of inj ection/HOOK, the determining module 10 can traverse entry addresses of all functions (or key functions) in the service application program; and then, detect whether the entry address and the service application program are in the same memory address space. If an entry address of a certain function is not in the same memory address space as the service application program, but is changed to memory address space of the third party library of the attacker, it indicates that the function encounters injection/HOOK, that is, the service application program encounters injection/HOOK. If all the traversed entry addresses of the functions are in the same memory address space as the service application program, it indicates that no function encounters injection/HOOK, that is, the service application program does not encounter injection/HOOK.

After the service application program is started, the determining module 10 can determine whether the service application program is debugged, to determine whether the aspect-oriented security on the mobile terminal keeps running. Specifically, the determining module 10 can determine, by reading a value of an object or a file that controls a debugging switch in the memory in the mobile terminal, whether the service application program is debugged. If the value of the object or the file that controls the debugging switch is true (or 1), it indicates that the service application program is debugged. If the value of the object or the file that controls the debugging switch is false (or 0), it indicates that the service application program is not debugged.

It may be understood that during running, the service application program may be at another risk of being attacked. The apparatus in this application is not limited to detection of the above-mentioned several risks, and can be extended as required. In other words, the determining module 10 can perform detection on any other possible risk on the service application program, and determine whether the service application program is at another risk of being attacked.

The injection module 20 is configured to: when a determining result of the determining module 10 is yes, acquire, based on a manner in which the mobile terminal is attacked, an attacked function in the service application program as an injection point, and inject an aspect program from the injection point by using an aspect base of the aspect-oriented security on the mobile terminal, to execute an aspect-oriented security service by using the injected aspect program.

When it is determined that the mobile terminal is at risk of being attacked, it indicates that the service application program is in a risky state, and the aspect-oriented security on the mobile terminal needs to be kept at running to monitor and provide a corresponding aspect-oriented security service function. In some embodiments, after it is determined that the mobile terminal is at risk of being attacked, the determining module 10 can send the determining result to the injection module 20, and the injection module 20 uploads the determining result to the aspect server. After receiving the information, the aspect server can deliver a default aspect configuration file to the aspect base of the aspect-oriented security on the mobile terminal, and then the aspect base injects an aspect program based on the default aspect configuration file, so that the aspect-oriented security service function is implemented by using the aspect program in a running process of the service application program. However, because the aspect configuration file is default, the injection point included in the aspect configuration file may be different from the attacked function of the service application program. For example, in the aspect configuration file, the attacked function is not used as the injection point. Alternatively, in the aspect configuration, the attacked function is used as the injection point, and another unattacked function is used as an injection point. In this way, a quantity of injection points is increased, thereby increasing pressure on the server. Therefore, in some other embodiments, when the determining result of the determining module 10 is yes, the injection module 20 can acquire, based on the manner in which the mobile terminal is attacked, the attacked function in the service application program as the injection point, send these injection points to the aspect base or first upload these injection points to the aspect server, deliver these injection points to the aspect base, and then inject the aspect program from these injection points by using the aspect base, to monitor actions of the attacker and provide the corresponding aspect-oriented security service function.

Specifically, if the mobile terminal encounters jailbreak/ROOT, the attacker leaves, in the memory, a high-risk file used for storing configuration information. When the service application program executes these high-risk files in a running process, the service application program is attacked by the attacker. Therefore, the injection module 20 can acquire, as an injection point, a function (for example, a fopen function and a fread function) used to operate these high-risk files in the service application program, and then inject the aspect program from these injection points by using the aspect base. For example, the injection module 20 can directly send these injection points to the aspect base, and the aspect base injects the aspect program from these injection points; or the injection module 20 can first upload these injection points to the aspect server, the aspect server delivers the aspect configuration file to the aspect base based on these injection points, and then the aspect base injects the aspect program from these injection points based on the aspect configuration, to collect and report fine-grained data about an action of the attacker.

If the service application program encounters injection/HOOK, the injection module 20 can acquire a function with injection/HOOK in the service application program as an injection point, and then inject the aspect program from these injection points by using the aspect base. For example, the injection module 20 can directly send these injection points to the aspect base, and the aspect base injects the aspect program from these injection points; or the injection module 20 can first upload these injection points to the aspect server, the aspect server delivers the aspect configuration file to the aspect base based on these injection points, and then the aspect base injects the aspect program from these injection points based on the aspect configuration, to collect and report fine-grained data about an action of the attacker.

If the service application program is debugged, the injection module 20 can acquire a debugged function in the service application program as an injection point, and then inject the aspect program from these injection points by using the aspect base. For example, the injection module 20 can directly send these injection points to the aspect base, and the aspect base injects the aspect program from these injection points; or the injection module 20 can first upload these injection points to the aspect server, the aspect server delivers the aspect configuration file to the aspect base based on these injection points, and then the aspect base injects the aspect program from these injection points based on the aspect configuration, to collect and report fine-grained data about an action of the attacker.

The exit module 30 is configured to: when a determining result of the determining module is no, exit the aspect-oriented security on the mobile terminal.

If it is determined that the mobile terminal is not at risk of being attacked, it indicates that the service application program is not in a risky state. When the service application program runs, the aspect-oriented security on the mobile terminal does not need to be kept at running. Therefore, when the mobile terminal is not at risk of being attacked, the aspect-oriented security on the mobile terminal can be directly exited, to avoid occupation of a resource of the aspect server. For example, when the determining module 10 determines that the mobile terminal is not at risk of being attacked, the determining module 10 can send the determining result of no to the exit module 30, and the exit module 30 uploads the determining result to the aspect server. When the aspect server receives the determining result of no, the aspect server delivers an empty aspect configuration file to the aspect base. After the aspect base receives the empty aspect configuration file, the security on the mobile terminal is directly exited. Alternatively, the exit module 30 can directly exit the aspect-oriented security on the mobile terminal when receiving the determining result of no.

According to the on-demand starting apparatus for mobile-terminal aspect-oriented security in this embodiment of this application, after the service application program and the aspect-oriented security on the mobile terminal are started, the determining module 10 first determines whether the mobile terminal is at risk of being attacked. After it is determined that the mobile terminal is at risk of being attacked, the injection module 20 can continue to run the aspect-oriented security on the mobile terminal, and perform injection from a related injection point based on an attack manner. Otherwise, the exit module 30 exits the aspect-oriented security on the mobile terminal. As such, the aspect-oriented security on the mobile terminal is started on demand, thereby avoiding unnecessary resource waste.

Still another embodiment of this application provides a readable storage medium storing a computer program. When the computer program is executed in a computer, the computer is enabled to perform steps in the method in the above-mentioned embodiments of this application.

Still another embodiment of this application provides an electronic device including a memory and a processor. The memory stores executable code. When the processor executes the executable code, the processor performs steps in the method in the above-mentioned embodiments of this application.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, during implementation of this application, functions of units can be implemented in the same or more software and/or hardware.

A person skilled in the art should understand that embodiments of this application may be provided as a method, a system, or a computer program product. Therefore, this application can use a form of hardware only embodiments, software only embodiments, or embodiments with a combination of software and hardware. Moreover, a form of a computer program product that is implemented on one or more computer-usable storage media (including but not limited to a disk memory, a CD-ROM, an optical memory, etc.) that include computer-usable program code can be used in this specification.

This specification is described with reference to the flowcharts and/or block diagrams of the method, the device (system), and the computer program product based on the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can also be stored in a computer-readable memory that can instruct a computer or another programmable data processing device to work in a specific manner, so that an instruction stored in the computer-readable memory generates an artifact including an instruction apparatus, and the instruction apparatus implements a function specified in one or more procedures in the flowcharts and/or one or more blocks in the block diagrams.

The computer program instructions can alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

In a typical configuration, the computing device includes one or more processors (CPU), input/output interfaces, network interfaces, and memory.

The memory may include a form such as a non-permanent memory, a random access memory (RAM), or a non-volatile memory in a computer-readable medium, for example, a read-only memory (ROM) or a flash memory (flash RAM). The memory is an example of the computer-readable medium.

The computer-readable medium includes a persistent and a non-persistent, a removable and a non-removable medium, which implement information storage by using any method or technology. The information can be computer-readable instructions, a data structure, a program module, or other data. Examples of the storage medium of the computer include but are not limited to a phase-change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disk (DVD) or another optical storage, a magnetic cassette tape, a magnetic disk storage or another magnetic storage device, or any other non-transmission medium, which can be configured to store information accessible to a computing device. As specified in this specification, the computer-readable medium does not include transitory computer-readable media (transitory media), such as a modulated data signal and a carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

A person skilled in the art should understand that embodiments of this application may be provided as a method, a system, or a computer program product. Therefore, this application may use a form of hardware only embodiments, software only embodiments, or embodiments with a combination of software and hardware. Moreover, a form of a computer program product that is implemented on one or more computer-usable storage media (including but not limited to a disk memory, a CD-ROM, an optical memory, etc.) that include computer-usable program code can be used in this specification.

This application can be described in a general context of a computer-executable instruction executed by a computer, for example, a program module. Generally, the program module includes a routine, a program, an object, a component, a data structure, etc. executing a specific task or implementing a specific abstract data type. This application can also be practiced in a distributed computing environment in which tasks are performed by remote processing devices connected via a communication network. In the distributed computing environments, the program module can be located in both local and remote computer storage media including storage devices.

Embodiments in this application are all described in a progressive manner. For same or similar parts in embodiments, reference can be made to these embodiments. Each embodiment focuses on a difference from other embodiments. In particular, for the system embodiment, because the system or system embodiment is basically similar to the method embodiment, descriptions are relatively simple. For related parts, refer to the descriptions in the method embodiment.

In short, the above-mentioned descriptions are merely example embodiments of this application, but are not intended to limit the scope of this application. The above-mentioned embodiments of this application may further make various changes. To be specific, all simple equivalent changes and modifications made according to the claims and the content of this specification of this application fall within the protection scope of the claims of this application. Content that is not described in detail in this application is conventional technical content.

## Claims

1. An on-demand starting method for mobile-terminal aspect-oriented security, comprising:
after aspect-oriented security on a mobile terminal is started with a service application program on the mobile terminal, determining whether the mobile terminal is at risk of being attacked; and
if yes, acquiring, based on a manner in which the mobile terminal is attacked, an attacked function in the service application program as an injection point, and injecting an aspect program from the injection point by using an aspect base of the aspect-oriented security on the mobile terminal, to execute an aspect-oriented security service by using the injected aspect program; or
otherwise, exiting the aspect-oriented security on the mobile terminal.

2. The on-demand starting method for mobile-terminal aspect-oriented security according to claim 1, wherein the determining whether the current mobile terminal is at risk of being attacked comprises:
determining whether the mobile terminal encounters jailbreak/ROOT; and/or
determining whether injection/HOOK occurs on the service application program; and/or
determining whether the service application program is debugged.

3. The on-demand starting method for mobile-terminal aspect-oriented security according to claim 2, wherein the determining whether the mobile terminal encounters jailbreak/ROOT comprises:
detecting whether a high-risk file used for storing configuration information exists in a memory of the mobile terminal, wherein if yes, the mobile terminal encounters jailbreak/ROOT; or otherwise, the mobile terminal does not encounter jailbreak/ROOT.

4. The on-demand starting method for mobile-terminal aspect-oriented security according to claim 2, wherein the determining whether injection/HOOK occurs on the service application program comprises:
traversing entry addresses of functions in the service application program, and then detecting whether the entry addresses of the functions and the service application program are in the same memory address space, wherein if yes, injection/HOOK does not occur on the service application program; or otherwise, injection/HOOK occurs on the service application program.

5. The on-demand starting method for mobile-terminal aspect-oriented security according to claim 2, wherein the determining whether the service application program is debugged comprises:
reading a value of an object or a file that controls a debugging switch in a memory, wherein if the value is true or 1, the service application program is debugged; or if the value is false or 0, the service application program is not debugged.

6. The on-demand starting method for mobile-terminal aspect-oriented security according to claim 2, wherein the acquiring, based on a manner in which the mobile terminal is attacked, an attacked function as an injection point comprises:
acquiring, as the injection point, a function, in the service application program, used to operate a high-risk file left after the mobile terminal encounters jailbreak/ROOT; and/or
acquiring a function with injection/HOOK in the service application program as the injection point; and/or
acquiring a debugged function in the service application program as the injection point.

7. An on-demand starting apparatus for mobile-terminal aspect-oriented security, comprising:
a determining module, configured to: after aspect-oriented security on a mobile terminal is started with a service application program on the mobile terminal, determine whether the mobile terminal is at risk of being attacked;
an injection module, configured to: when a determining result of the determining module is yes, acquire, based on a manner in which the mobile terminal is attacked, an attacked function as an injection point, and inject an aspect program from the injection point by using an aspect base of the aspect-oriented security on the mobile terminal, to execute an aspect-oriented security service by using the injected aspect program; and
an exit module, configured to: when a determining result of the determining module is no, exit the aspect-oriented security on the mobile terminal.

8. The on-demand starting apparatus for mobile-terminal aspect-oriented security according to claim 7, wherein the determining whether the current mobile terminal is at risk of being attacked comprises:
determining whether the mobile terminal encounters jailbreak/ROOT; and/or
determining whether injection/HOOK occurs on the service application program; and/or
determining whether the service application program is debugged.

9. The on-demand starting apparatus for mobile-terminal aspect-oriented security according to claim 8, wherein the determining whether the mobile terminal encounters jailbreak/ROOT comprises:
detecting whether a high-risk file used for storing configuration information exists in a memory of the mobile terminal, wherein if yes, the mobile terminal encounters jailbreak/ROOT; or otherwise, the mobile terminal does not encounter jailbreak/ROOT.

10. The on-demand starting apparatus for mobile-terminal aspect-oriented security according to claim 8, wherein the determining whether injection/HOOK occurs on the service application program comprises:
traversing entry addresses of functions in the service application program, and then detecting whether the entry addresses of the functions and the service application program are in the same memory address space, wherein if yes, injection/HOOK does not occur on the service application program; or otherwise, injection/HOOK occurs on the service application program.

11. The on-demand starting apparatus for mobile-terminal aspect-oriented security according to claim 8, wherein the determining whether the service application program is debugged comprises:
reading a value of an object or a file that controls a debugging switch in a memory, wherein if the value is true or 1, the service application program is debugged; or if the value is false or 0, the service application program is not debugged.

12. The on-demand starting apparatus for mobile-terminal aspect-oriented security according to claim 8, wherein the acquiring, based on a manner in which the mobile terminal is attacked, an attacked function as an injection point comprises:
acquiring, as the injection point, a function, in the service application program, used to operate a high-risk file left after the mobile terminal encounters jailbreak/ROOT; and/or
acquiring a function with injection/HOOK in the service application program as the injection point; and/or
acquiring a debugged function in the service application program as the injection point.

13. A readable storage medium, storing a computer program, wherein when the computer program is executed in a computer, the computer is enabled to perform the on-demand starting method for mobile-terminal aspect-oriented security according to any one of claims 1 to 6.

14. An electronic device, comprising a memory and a processor, wherein the memory stores executable code, and when executing the executable code, the processor performs the on-demand starting method for mobile-terminal aspect-oriented security according to any one of claims 1 to 6.
